# EUROPEAN PATENT APPLICATION

(11) **EP 2 306 336 A1**
(43) Date of publication of application: **06.04.2011**
(21) Application number: 09425377.0
(22) Date of filing: 28.09.2009
(51) Int. Cl.: G06F 17/30

(54) **Procedure for automatic co-update of street data for geographic information system (GIS)**

(71) Applicant: E-Technology Masters' srl, 20135 Milano (IT)
(72) Inventor: Biancofiore, Marco, 20149 Milano (IT)

(57) **Abstract**

A new geodatabase schema for network, where two feature class are present, Street Section and Junction, haveing two new columns / properties: Origin and GeoGuid.

A new coded procedure allow to co-update in the time the geodatabase both from new releases of the commercial network, and from the street modification introduced in the street network by the user of the GIS sistem

This allows people moving on the land with a palmtop PC to have a network situation always updated by the user of the GIS system

## Description

### 1 Field of Application (Scope)

The general field of application of this patent request is Geographic Information Systems (GIS).

Geographic Information Systems are IT systems used to manage, analyse and visualise geographic information.

Technology Architecture - a GIS uses various technologies, including:
- GIS Server - provides a range of services and is the foundation on which a GIS application developer relies. The most widely used worldwide is the ArcGis Server from ESRI which makes three services available to the developer:
   ○ Maps
   ○ GeoCoding services
   ○ Geo-processing tools
- Development Environment - generally Visual Studio or Java - used to create the application layers which then use the services provided by the GIS server.

The extended GIS Server system This brief description is based on the technology architecture of an ArcGis-based system, but remains generally valid for other GIS servers.

The ArcGis Server is an 'object server'. It manages ArcOjects which are executed on the server and are known as GIS server objects. These software objects can be maps, location references, etc, and are provided as required by the GIS.

The ArcGis Server is part of an extended system made up of multiple components which all request services from it:
- A web server hosts web applications that use ArcGis Server objects
- These applications are in turn developed in .Net (as is the case with this patent request) or Java as the Application Development Framework
- The web browser is used to connect to the web applications which are executed on the Web Server
- The desktop applications which connect via http to the ArcGis Web Services published on the web server, or directly to the GIS server via LAN/WAN
- The ArcGis Server objects are then used locally by a series of map editing products (ArcView) or for system management (ArcCatalog)
- Finally, GIS data is accessed and modified using an ArcGis component which manages interaction with the database

### 2 Current state of small scale GIS routing systems

### 2.1 Current situation: commercial databases

The current situation. Today, street data is collected by specialist companies. The two worldwide market leaders are TeleAtlas and Navtec.

The services and costs of these two providers are broadly comparable.

They provide street data to their clients on digital media. This data is then exported to the local system, generally in RDBMS, as a standard data transfer.

Using the imported data, the client then develops their GIS application:
- In more advanced systems, commercial street usage data are combined with geographical data in the geo-database. This can include, for example, public transport stops. Although the general street data is acquired externally, additional data enrichment is added by the user.
- The GIS system understands geographical maps which use both first level data (purchased externally) and second level data (inserted by users). It is by using a combination of this data that the application provides a service - explaining, for example, the routes and timetabling of public transport systems at street level.

Commercial networks - specialist companies gather commercial street data through periodic fieldwork, reviewing at time intervals of 4-5 years.

This method and the quality of the results are strongly affected by:
- Which commercial entities are likely to benefit from the sevice
- The cost of fieldwork and review

The quality of the information and service provided by these specialist companies is inevitably focused on 'large scale routing' which allows users to:
- Locate a particular street in an urban conurbation
- Identify the route from one place to another - normally over longer distances

Unsupported Applications - GIS systems really ought to lend themselves to a large number of applications which rely on 'small scale routing'. This is not possible today using the available commercial networks which lack the necessary degree of detail and granularity.

There are many potential application areas which would be possible if 'small scale' routing were available:
- Improved post and parcel delivery
- Utility meter reading
- Food and beverage distribution to self-service machines
- Refuse and recycling services
- Road surface repair and maintenance

All these application possibilities require a greater degree of reliability, responsiveness and detail than is currently available from existing service providers.

Commercial Network Limitations - in general, the further you move from city centres, the less reliable the information of existing service providers becomes.

The quality of detail is often impossible for them to achieve, simply because it is not cost-effective to gather and compile.

An application designed to improve collection of utility usage data, or postal delivery, or refuse management needs to know
- If there is a secondary street (not actually present in the commercial network) leading to the house of a specific person
- The X,Y co-ordinates of the house.

This information cannot be collected cost-effectively by the commercial providers of street data.

### 2.2 The current state of GIS routing: limitations and a possible solution

Systems at the Limit To create these 'small scale' GIS applications (which cannot readily be found today), one could consider staying with current technology models, and simply increasing the level of detail and relevance of data.

In reality, this is not an option: such an increase would take current systems to the limit and this necessitates a change in the model, both in terms of the process and of at least some of the technologies used.

Small scale geographical data profile To profile the exact address and occupancy details across a country the size of Italy would incur prohibitive costs. If attempted with existing institutional mechanisms, it would pose organisational problems which would be difficult to overcome.

To increase the granularity of the street data (creating, for example, two time profiles for the same area) would increase costs for the commercial service provider to an extent which would price them out of the market.

In reality, the nature of small scale street data differs so much by type and area, that whole segments of information which may be of critical interest to one group of users, would have no relevance at all for another.

A 'Double-Enty' Geo-Database For all of these reasons, there is only one viable solution to acquiring small scale street data: it must be gathered directly by those who use it.

In this way, only those who use the individual GIS system carry the burden of cost and additional procedural complexity for the information they need realting to the zones in which they are interested.

How does this work in reality? The agents of a company, for example, contracted to gather usage data by utility companies makes a first pass at profiling the civic addresses using palm PCs, and as they do so, the data is automatically gathered and visualised on the maps.

On the basis of the input information, the system can then trace the route which best encompasses all the necessary touchpoints. This information in turn optimises the next round by the meter-reader.

For companies operating these reading services - especially outside the city centre - it is frequently necessary to modify and correct street data and geo-coding. They frequently find that 'new streets' are not indicated on their maps or indeed that smaller streets and alleys are ignored altogether.

In conclusion, applications which require small scale routing must be able to co-ordinate and combine information derived from both the macro provider and from the end-users themselves. This complicates the scenario, because it requires that continual updates from two distinct information sources can be cross-checked and aligned.

This requirement represents a step, change in the practical application of GIS systems, and is the subject of this patent request.

Before looking at the subject of the request in more detail, here is a summary of the critical issues affecting small scale routing today.

First critical issue: geo-database models To organise more detailed information the database must be significantly enriched. In today's models, for example, civic registration is limited to four fields in Street Section.

Second critical issue: update procedure The new small scale GIS applications require that data is updated both by the GIS service provider and by the end-user community. In the geo-database, one data class is frequently linked to another - a street number, for example, is linked to the street. The additional or alternative data classes required for small scale GIS applications can create problems for these existing linked data relationships.

Third critical issue: using mobile devices for field profiling Small scale data profiling demands the field use of palm PCs capable of accepting input and sending it directly to the central server. Tools which were once considered peripheral now become central thanks to web service communication.

### 2.3 Limits of the current scenario: co-updating the geo-database

Using commercially sourced information with user-delivered information in the geo-database As described above, small scale GIS systems need to combine information from these two sources, and need to be able to handle updates from both sources as they happen:
- The commercial source delivers the mass of street atlas information
- The user community delivers 'fine grain' information on street changes or on classes which are not on the commercial radar, such as street numbers and their GIS co-ordinates

The geo-database must contain at least two feature classes which are closely related: the street 'sections' and the junctions which represent the breaks between one street section and the next.

The relationship between these street 'sections' and the junctions must be retained, and this means that these topological relationships must be respected if the representation of the street network is to be effective.

When only the commercial network information is used, without combining it with user input, these relationships retain their integrity.

If the end user is invited to edit the commercial network, adding for example an alleyway not present on the commercial system, these topographical relationships between street sections must continue to be maintained.

Loading a new release of the commercial network This poses a particular challenge. When a new release of the commercial network is issued it must not 'zero' the existing geo-database profile as this would mean starting all over again with the user-added data.

The consequences of this are shown in the figure below:
- First the initial release of the commercial network which is the first version of the data is imported
- Second 'user-modifications' to the geo-database such as revised routes, house numbers and so on are added
- Third the subsequent release of the commercial network is imported in a way which ignores the existing user-added information and therefore destroys the integrity of the database

Objectives For the geo-database to maintain its integrity as subsequent releases are issued, it is necessary to:
- Revise the geo-database model adding properties which allow this complexity to be managed
- Add procedures which rebuild the existing links and dependencies within the model

### 3 The Invention: a geo-database model and process which enables automatic update and relationship reconstruction for GIS systems

### What it is all about

There are two constituent parts to the invention:
- A modification to the geo-database model as used by the commercial supplier of street network data. Specifically this relates to the addition of two feature classes: street 'sections' and junctions.
- The process which allows modifications to the geo-database made by the user community to be carried through into subsequent releases of the commercial street network

### In detail: geo-database modification

Geo-database modification Modification essentially comprises changes to two feature classes: street sections and junctions.

Specifically, two columns or new properties are added to both classes:
- Origin - this column/property contains information regarding geographical characteristics which can:
   o Originate with the commercial network and be unaffected by user modifications
   o Be created by the user
   o Originate with the commercial network, but be modified by the user
- GeoGuid - the column/property is a unique identifier of an instance of the feature class. It is based on the geographic characteristics and is able to identify an instance from them: a junction, for example, can only have one set of X/Y co-ordinates. This concept has been introduced to allow a feature class to continue to be recognised when a new network release is issued.

### In detail: geo-database update process

The Process is followed every time a new release of the commercial network is issued and ensures that modifications made to the geo-database during the life-cycle of the previous release are carried forwards.

The process comprises a series of sub-processes, each of which manages a different type of change. Changes can be of three types:
- Extension - the user starts from the existing end-junction of a street section, and adds a new section.
- Bifurcation - the user starts from the existing non-terminal junction of a street section, and adds a new section
- Split - the user adds a new junction to an existing street section, dividing it in two

### Sub-process to update the eXtension

After a new network release has been correctly mapped to the geo-database, the GeoGuid verification process checks to see if the ID of the terminal junction has changed.

If there is no change to the terminal ID, then no modification of the geo-database is needed -the addition of new sections, has not changed the ID or connection properties.

Had the first junction of the street section added by the user changed ID, then this value would need to be aligned in the geo-database.

In this way, the network can ensure that it is continually refreshed and integrity maintained.

### Sub-process to update bifurcation

These modifications are managed using a similar logic.

Here too, it is necessary to refresh the network connection, identifying the original junction and the first of the new sections added by the user. The appropriate link beteen old and new is established.

### Sub-process to update a split

Here the logic is more complex, and is indicated in the figure below. A split takes a street section from the NWB network which comprises the previous NWA section and subsequent NWB section, adding to this the new junction, indicated here by JN.

This operation has:
- Cancelled the old NWB section which is stored in the SectionCancelled table in GeoGuid
- Added two new sections - NWN1 and 2, which share a connection to the new JN junction
- Connected NWN1 to JA and NWJ2 to JB

Here the process must reconnect NWN1 to the junction in the new network release which corresponds to JA and NWN2 to that which corresponds to JB.

### Description of the figure

In the annexed figure the schema of a split of a Street Section in a network geodatabase.

Before the split there is a set of 3 connected Street Sections: NWA, NWB, NWC, JA is the Junction connecting NWA and NWB, and JB is the Junction connecting NWB and NWC

The user introduces a Junction JN splitting NWB in NWN1 and NWN2 connected by JN.

After this operation the coded procedure re-build the connections betweeb JN and the new StreetSections

### Advantages and Benefits

The key advantage of this new database model and associated processes is that they allow the geo-database to be updated and its integrity maintained through different releases as modifications are made by both commercial network service providers and by the users themselves.

This ensures that the geo-database can be constantly updated to reflect the physical reality of the territory covered at an affordable cost. It benefits from the dual focus and contribution from the commercial network service providers and the 'feet on the street' of those who both use and contribute to profitable new GIS applications.

## Claims

1. A new Geodatabase model for GIS applications for palm PCs, **characterized in the fact that the** network geodatabase contains two feature class Street Segment and Junctions, having specifically the next two column / properties
- Origin. This column/property contains information regarding geographical characteristics which can: Originate with the commercial network and be unaffected by user modifications created by the user originate with the commercial network, but be modified by the user
- GeoGuid. This column / property is a unique identifier of an instance of the feature class. It is based on the geographic characteristics and is able to identify an instance from them. This property has been introduced to allow a feature class to continue to be recognized when a network release is issued

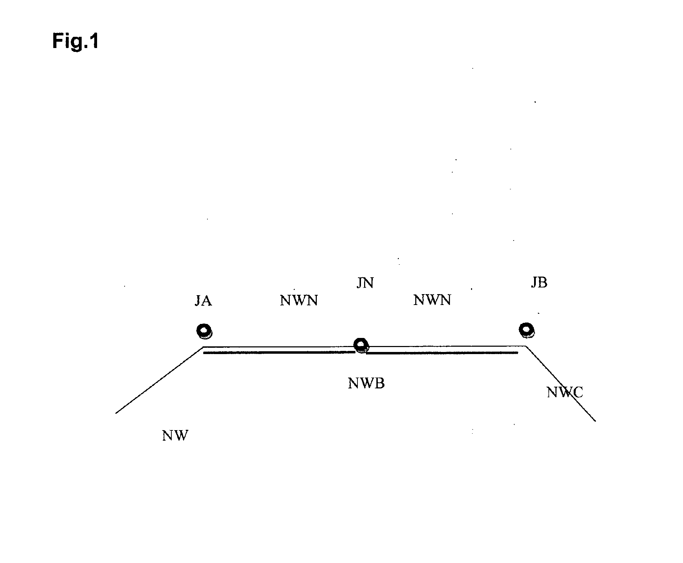

2. A new Geodatabase model for GIS applications for palm PCs as claimed in claim 1, **characterized in the fact that the** a new Procedure is provided, followed every time a new release of the commercial network is issued and ensures that modifications made to the geo-database during the life-cycle of the previous release are carried forwards.
The process comprises a series of sub-processes, each of which manages a different type of change. Changes can be of three types:
Extension. The user starts from the existing end-junction of a street section, and adds a new section. After a new network release has been correctly mapped to the geo-database, the GeoGuid verification process checks to see if the ID of the terminal junction has changed. If there is no change to the terminal ID, then no modification of the geo-database is needed -the addition of new sections, has not changed the ID or connection properties. Had the first junction of the street section added by the user changed ID, then this value would need to be aligned in the geo-database. In this way, the network can ensure that it is continually refreshed and integrity maintained
Bifurcation. The user starts from the existing non-terminal junction of a street section, and adds a new section. These modifications are managed using a similar logic. Here too, it is necessary to refresh the network connection, identifying the original junction and the first of the new sections added by the user. The appropriate link beteen old and new is established Split. Here the logic is more complex, and is indicated in the figure 1. A split takes a street section from the NWB network which comprises the previous NWA section and subsequent NWC section, adding to this the new junction, indicated here by JN. (look at the next figure). This operation has cancelled the old NWB section which is stored in the SectionCancelled table with its GeoGuid, has added two new sections NWN1 and 2, which share a connection to the new JN junction, has connected NWN1 to JA and NWN2 to JB. Here the procedure will reconnect NWN1 to the junction which corresponds in the new network release to JA and NWN2 to the junction which corresponds in the new network release to JB
